# EUROPEAN PATENT SPECIFICATION

(11) **EP 3 072 787 B1**
(45) Date of publication and mention of the grant of the patent: **14.02.2018**
(21) Application number: 16160823.7
(22) Date of filing: 17.03.2016
(51) Int. Cl.: B62D 7/02, B66F 9/075

(54) **STEERING ARRANGEMENT**
LENKANORDNUNG
AGENCEMENT DE DIRECTION

(30) Priority: 26.03.2015 SE 1550371
(43) Date of publication of application: 28.09.2016
(73) Proprietor: Actil Warehouse Trucks AB, 590 78 Vreta Kloster (SE)
(72) Inventor: LORIN, Ingemar, 590 47 VIKINGSTAD (SE); FRANSSON, Krister, 585 96 LINKÖPING (SE)

(56) References cited:
- DE-A1- 1 655 200
- JP-A- 2002 087 039
- US-A- 2 713 918
- US-A- 2 848 247
- US-A- 3 031 024
- US-B1- 7 237 629

## Description

### Technical Field

The present invention relates to a steering arrangement according to claim 1.

### Background

Industrial trucks or machines having similar steering arrangements usually have a front and a rear pair of wheels, mounted in e.g. the baseplate or a suspension device. The front pair of wheels preferably has wheels not being steerable and being rotatable on a common horizontal axis of rotation. The rear pair of wheels has a first wheel and a second wheel. The first and the second wheels, respectively, can be turned around vertical axes and are rotatable around horizontal axes, which vertical and horizontal axes are different for the respective wheels. One of the rear wheels is steered and driven, and the other of the rear wheels is not steered and not driven. The rear wheel not being driven is a so called free running wheel, the turning pattern of which depends on how the driven and steered wheel is maneuvered. In order to provide stability during travel with the truck, the free running wheel has its vertical rotary mount in front of the horizontal rotary axis, seen in the travelling direction of the industrial truck. With this design the wheel occupies extra space when reversing the direction of travel, i.e. when the industrial truck has been driven forwards and then is to go backwards, the rear non-driven wheel has to rotate half a turn, and the wheel has to be arranged underneath the industrial truck in order not to protrude outside of the body of the industrial truck, where there is a risk for that the wheel hits objects outside the periphery of the baseplate of the truck or the suspension device for the wheel.

In operation and during travel of an industrial truck or a machine having a similar steering arrangement, a different driving behavior will result, depending on if the rear steered and driven wheel is innermost or outermost when driving in a turn. In case the rear, steered, and driven wheel is arranged outermost in a turn when taking the turn, all the weight of e.g. the industrial truck will be on the rear steered, driven wheel and it is possible to drive fast without the risk of skidding or any problems with understeering. In case the rear steered, driven wheel is innermost of the rear wheels in a turn and the rear non-steered and non-driven wheel is outermost in a turn, when taking the turn, the rear non-steered and non-driven wheel will be affected by the weight of e.g. the industrial truck, which acts on the rear non-steered, and non-driven wheel. The rear non-steered, and non-driven wheel is e.g. a "link wheel", which cannot take up any forces in a lateral direction, which means that the non-steered and non-driven wheel cannot resist the centrifugal force acting on the industrial truck, when the rear non-steered and non-driven wheel is outermost in a turn when taking the turn. The result of this will be that the industrial truck easily skids and understeers, when the industrial truck turns in one direction, and that industrial trucks or machines having similar steering arrangements having this construction will have different running characteristics depending on in which way the driver chooses to turn, which is dangerous from a safety point of view.

The non-steered link wheel can be turned around the vertical mounting axis. In case the link wheel is turned in towards the central part of the truck, the dimension of the rear wheelbase of the truck is diminished with twice the offset, which in this case is the distance between the vertical mounting axis and the horizontal rotary axis of the link wheel, if the non-steered link wheel is turned half a turn around its vertical mounting axis from the broadest optimum position, in which the wheel would be constantly, if the need of an offset had not existed. The horizontal axis of rotation of the link wheel is situated straight above the contact surface of the link wheel with an underlying surface. This wheel base reduction means that the tilting risk increases especially if the truck for some reason starts to tilt towards the side of the truck, where the non-steered and non-driven link wheel is situated while at the same time the non-steered and non-driven link wheel is turned inwards towards the central part of the truck.

The above described steering arrangement for industrial trucks has several drawbacks, inter alia that the free running wheel is subjected to a heavy wear since it is often turned when the truck is standing still, and when taking turns. The free-running wheel in the above described steering arrangement has to be mounted so far in from the side of the baseplate of the truck or the suspension device, that it cannot not protrude beyond the edge of the baseplate or the suspension device when turning the free-running wheel. This implies that the wheel base will not be as wide as it optimally should be from a stability point of view, since the first and the second wheels of the rear wheel pair cannot be placed at the longest possible distance from each other, which means that there is an increased risk for that the truck overturns or skids, depending on the direction of turn the driver takes.

The patent application DE1655200 A1 discloses in combination the features of the preamble of claim 1.

### Summary of the Invention

One object of the present invention is to provide a steering arrangement for an industrial truck or a machine having a similar steering arrangement, which solves the above mentioned problems existing with prior art steering arrangements.

A steering arrangement comprising a baseplate and/or a suspension device, onto which a first and a second pair of wheels are mounted in order to rest on an underlying surface.
The first pair of wheels has non-steerable wheels, which are mounted on the baseplate and/or the suspension device, the second pair of wheels comprises a driven wheel, which is steerable around a first vertical axis, and a non-driven wheel which is turnable around a second vertical axis. The non-driven wheel of the second pair of wheels and the driven wheel are coupled with each other through a transmission device, which converts a steering movement of the driven wheel to a synchronized steering movement of the non-driven wheel, so that mutually corresponding turning radii for the respective wheels are achieved in both turning directions, i.e. the respective radius Ry, Ri through the center of the respective wheel intercept each other on an extended line through the horizontal axis of rotation of the front pair of wheels in a center point CP, while at the same time the wheels are arranged at right angles in relation to the turning radii.

The transmission device comprises an asymmetric turning plate, which is connected to the non-driven wheel, being turnable around said second vertical axis; an output shaft which is affected by the first steerable wheel; and a chain, a belt, or similar device, which connects said asymmetric turning plate and said output shaft. The transmission device comprises a turning device, on which the driven wheel is mounted. The turning device comprises a first gear, with which the driven wheel connected, a second gear and a third gear, whereby the second gear is driven and meshes with the first and the third gears.

The transmission device comprises a pressure means arranged against the chain or belt in order to regulate the tension force of the chain or the belt.

The first pair of wheels is arranged in the proximity of a first transverse side of the base plate and/or the suspension device, and the second pair of wheels is arranged in the proximity of a second transverse side of the baseplate and/or the suspension device, in order to provide an industrial truck, which is stable in operation.

### Short description of the Drawings

The invention will now be described with reference to non-limiting embodiments of the invention shown in the attached drawings, on which:
Fig.1 shows a perspective view of a steering arrangement according to the invention,
Fig. 2 shows a view from underneath of the steering arrangement according to the invention,
Fig. 3 shows a view from underneath of the steering arrangement according to the invention, and
Fig. 4 shows a view from underneath of the steering arrangement according to the invention.

### Description of Embodiments

Below, a detailed description of the steering arrangement for an industrial truck and machines having similar steering arrangements according to the invention will follow. An industrial truck is preferably provided with a front pair of wheels, which is not steerable, and a rear pair of wheels. The front pair of wheels preferably has wheels, which are mounted fixedly and rotatable around a horizontal axis of rotation which is common for the wheels.

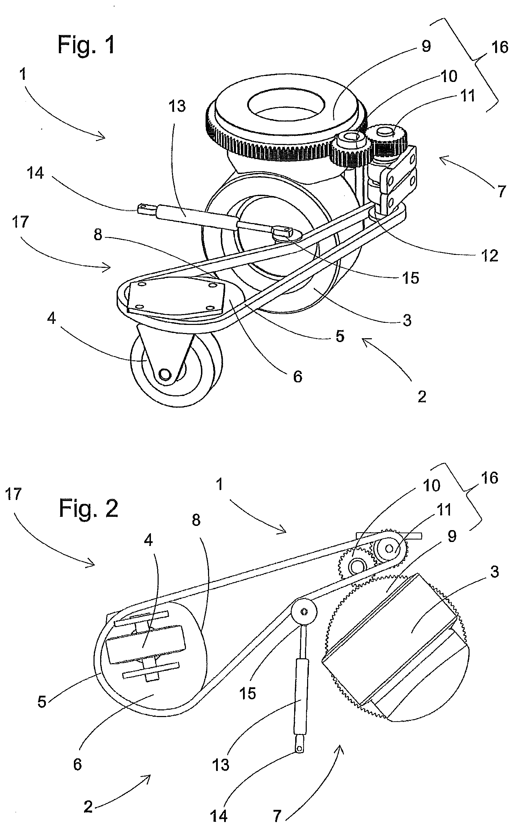

In Fig. 1 a perspective view is shown and Fig. 2 shows a view from underneath of the steering arrangement 1 for an industrial truck having a baseplate and/or a suspension device (not illustrated) according to the invention. The steering arrangement 1 comprises the front pair of wheels (not illustrated) and the rear pair of wheels 2, of which the rear pair of wheels 2 is steerable. The front pair of wheels and the rear pair of wheels 2 are arranged to touch an underlying surface. The first pair of wheels is preferably arranged adjacent to a first transverse side of the baseplate and/or suspension device, and the second pair of wheels is preferably arranged adjacent to a second transverse side of the baseplate and/or suspension device, this in order to provide a distance as large as possible between all wheels of the truck, and accordingly a wide wheel base in order to make the truck as stable as possible during travel and operation.

The rear pair of wheels 2 has a first wheel 3 and a second wheel 4. The first and the second wheel 3, 4, respectively, are turnable and rotatable around vertical and horizontal axes, respectively, which are different for the respective wheels. One of the rear wheels is steered and driven and the other of the rear wheels is indirectly steered and non-driven. The driven and steerable rear wheel 3 is turnable around a first vertical axis, and the non-driven and rotatable wheel 4 is turnable around a second vertical axis. The indirectly steered and non-driven rear wheel 4 is a free-running wheel, the turning pattern of which depends on how the driven and steered wheel is maneuvered. The driven wheel 3 is preferably driven by an electric motor (not illustrated).

The non-driven wheel 4 of the second pair of wheels 2 and the driven wheel 3 are mutually coupled through a transmission device 17, which converts a steering movement of the driven wheel 3 to a synchronized steering movement of the non-driven wheel 4 in such a way that mutually corresponding turning radii for the respective wheels 3, 4 are achieved in both turning directions, i.e. the respective radius Ry, Ri through the center of the respective wheel 3, 4 intersect each other on an extended line through the horizontal axis of rotation of the front pair of wheels in a center point CP, while at the same time the wheels 3, 4 are arranged at right angles in relation to the turning radii.

The transmission device 17 comprises an asymmetric turning plate 6, being connected to the non-driven wheel 4, being turnable around said second vertical axis; an output shaft 12, which is affected by the first steerable wheel; and a chain or a belt 5 or corresponding device, which connects said asymmetric turning plate 6, and said output shaft 12.

The non-driven wheel 4 and driven wheel 3 of the rear pair of wheels 2 are coupled through an encircling connection means 5, which, when the truck is turned, will rotate the driven and non-driven wheels 3, 4 in relation to each other. The encircling connection means 5 is preferably a chain or a belt or a corresponding device.

The transmission device 17 comprises the turning plate 6, on which the non-driven wheel 4 is mounted. Further, the transmission device 17 comprises a turning device 7, on which the driven wheel 3 is mounted. The encircling connection means 5 is arranged to connect the turning plate 6 and the turning device 7. The edge surface 8 of the turning plate 6 is designed to engage with the encircling connection means 5, which edge surface 8 has an engagement design, which is complementary to the design of the encircling connection means 5. Further, the turning plate 6, on which the non-driven wheel 4 is mounted, has an asymmetric design.

The turning device 7 on which the driven wheel 3 is mounted, comprises a gear reduction set 16 having a first gear 9, being engaged with the driven wheel 3, a second gear 10 and a third gear 11. The driven wheel 3 is driven by the engine of the truck. The second gear 10 is driven by a servo motor (not illustrated) and is engaged with the first gear 9 and with the third gear 11, and the encircling connection means 5 is connected with the third gear 11. The second gear 10 has a size, which is smaller than the first gear 9, resulting in that the velocity of the servo motor acting on the second gear 10 is geared down so that the first gear 9 will have a velocity, which is lower than for the second gear 10. The third gear 11 is provided with an output shaft 12, with which the encircling connection means 5 is connected. In an alternative embodiment the gear reduction set 16 might for example be a rack and pinion gear, planetary gearing, etc. In an alternative embodiment the connection means 5 might be connected to the second gear 10.

The transmission device 17 comprises a pressure means 13 acting against a free running part of the encircling connection means 5, e.g. the chain or the belt, in order to regulate the tension force in the encircling connection means 5. The pressure means 13 is supposed to press against the encircling connection means 5, in order to maintain a desired tension in the connection means 5, which is necessary because the tension will vary during travel since the turning wheel is asymmetric. The pressure means 13 is elongated and fastened in the truck at a first end 14, a second end 15 of the pressure means 13 being arranged to bear against the encircling connection means 5 in order to provide a tensioned, force transferring, encircling connection means 5. The encircling connection means 5 forms a loop, which runs around the turning plate 6 and is connected to the output shaft 12, which is connected to the third gear 11. The pressure means 13 acts against a free running part of the encircling connection means 5, shown in Fig. 2, and that part of the encircling connection means, which is arranged on the opposite side of the location, from where the pressuring device 13 acts, is always straight and tight. One prerequisite to be able to transfer the turning force from the driven wheel 3 to the non-driven wheel 4 is that the encircling connection means 5 is tight and straight. The pressure means 13 might for example be a gas damper, hydraulic damper, a mechanical spring, etc.

Connecting the non-driven wheel 4 and the driven wheel 3 with each other through the transmission device 17, will result in that the steering movement of the driven wheel 3 will be converted to a synchronized steering movement of the non-driven wheel 4, which means that e.g. the truck can resist the centrifugal force when taking turns and thus the same steering effect will be provided independently of in which way the driver turns.

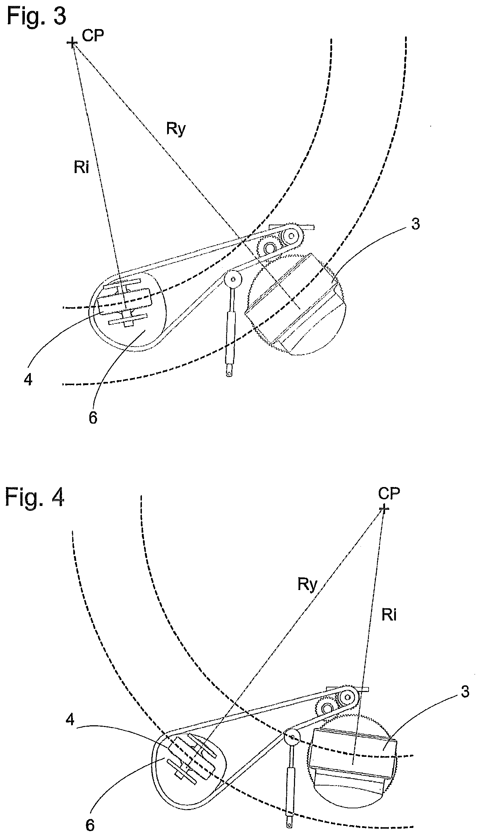

Figs. 3 and 4 show views from underneath of the steering arrangement 1 according to the invention. Fig. 3 shows the driven wheel 3 arranged on the outer circle and the non-driven wheel 4 on the inner circle, and Fig. 4 shows the opposite placement of the wheels in relation to what is shown in Fig. 3. One part of an outer circle and one part of an inner circle are shown, with a common center point CP. The position of the center point CP is obtained by extending a line (not shown) from the horizontal axis of rotation of the front pair of wheels and at the same time drawing lines Ry, Ri from the rear wheels 3, 4, which are at right angles relative to the rear wheels 3, 4 direction of propagation. The center point CP will thus be found where the larger radius Ry and the smaller radius Ri intersects the extended line from the horizontal axis of rotation of the pair of front wheels according to the principle of "Ackerman's steering geometry".

For example, when the truck turns, the wheel being situated outermost will travel along a larger radius Ry than the wheel being situated innermost along the smaller radius Ri, and therefore the inner wheel has to be positioned at a larger angle in relation to the travel direction of the truck than the outer wheel. This means also that the outer wheel should be given a smaller steering effect than the inner one. No angle difference between the rear wheels in relation to the rotation point, i.e. the center point CP, will accordingly be found, since both rear wheels are arranged at right angles towards the center point CP. This state is important, since this is what makes it possible to get the wheels to cooperate and turn in the same direction, and to prevent increased wear of the rear wheels 3, 4, and in particular of the non-driven rear wheel 4.

The asymmetric design of the turning plate 6 is due to that it compensates for the different lengths of the turning radii Ry, Ri, depending on which of the rear wheels is innermost and outermost, respectively. For each steering movement made by the truck, there is one relation between the wheels, which is governed for each turning degree, and thanks to the fact that the turning plate 6 has an asymmetric form, which is balanced and compensated for the relation between the wheels 3, 4, it is possible to stand up against the different degrees of turning.

In case the non-driven wheel 4 is situated innermost, which is shown in Fig. 3, the non-symmetric turning plate 6 is arranged to turn more, because the inner wheel is placed at a larger angle in relation to the travel direction of the truck, relative the outer wheel. In case the non-driven wheel 4 is outermost, which is shown in Fig. 4, the turning plate is arranged to turn less compared to the case where the non-driven wheel 4 is innermost, and this because of that the outer wheel is placed at a smaller angle in relation to the travel direction of the truck compared to the inner wheel.

## Claims

1. A steering arrangement (1) comprising
a baseplate and/or a suspension device, upon which a first and a second pair of wheels (2) are arranged to rest against an underlying surface,
the first pair of wheels having non-steerable wheels, which are mounted on the baseplate and/or the suspension device,
the second pair of wheels (2) comprising a driven wheel (3) which is steerable around a first vertical axis, and a non-driven wheel (4), which is turnable around a second vertical axis,
the non-driven wheel (4) of the second pair of wheels (2) and the driven wheel (3) are mutually coupled through a transmission device (17), which converts a steering movement for the driven wheel (3) to a synchronized steering movement of the non-driven wheel (4),
**characterized in that** the transmission device (17) comprises a turning plate (6) with an asymmetric form being connected to the non-driven wheel (4), which can be turned around said second vertical axis; an output shaft (12), which is affected by the first steerable wheel; and a chain, a belt (5) or similar device, which connects said asymmetric turning plate (6) and said output shaft (12), so that mutually corresponding turning radii for the respective wheels are achieved in both turning directions, i.e. the respective radius (Ry, Ri) through the center of the respective wheel intersect each other on an extended line through a horizontal rotational axis in a center point (CP), while at the same time the wheels are arranged at right angles in relation to the turning radii.

2. The steering arrangement according to claim 1, **characterized in that** the transmission device (17) comprises a turning device (7), on which the driven wheel (3) is mounted.

3. The steering arrangement according to any of claims 1 - 2, **characterized in that** the turning device (7) comprises a first gear (9), with which the driven wheel (3) is coupled, a second gear (10) and a third gear (11), whereby the second gear (10) is driven and is engaged with the first and the third gears (9, 11).

4. The steering arrangement according to any of claims 1 - 3, **characterized in that** the transmission device (17) comprises a pressure means (13), being arranged to press against the chain or belt (5) in order to regulate the tension force in the chain or the belt (5).

5. The steering arrangement according to any of claims 1- 4, **characterized in that** the first pair of wheels is arranged in the proximity of a first transverse side of the baseplate and/or the suspension device, and the second pair of wheels is arranged in the proximity of a second transverse side of the baseplate and/or suspensions device.

6. An industrial truck comprising the steering arrangement according to any of the preceding claims 1 - 5.

## Patentansprüche

1. Eine Lenkanordnung (1), umfassend
eine Grundplatte und/oder eine Aufhängevorrichtung, worauf ein erstes Paar und ein zweites Paar Räder (2) angeordnet ist, um auf einer darunterliegenden Fläche anzuliegen,
wobei das erste Paar Räder nicht-lenkbare Räder aufweist, welche an der Grundplatte und/oder der Aufhängevorrichtung angebracht sind,
wobei das zweite Paar Räder (2) ein angetriebenes Rad (3), welches um eine erste vertikale Achse lenkbar ist und ein nicht-angetriebenes Rad (4), welches um eine zweite vertikale Achse drehbar ist, umfasst,
wobei das nicht-angetriebene Rad (4) des zweiten Paares Räder (2) und das angetriebene Rad (3) über eine Übertragungsvorrichtung (17), die eine Lenkbewegung des angetriebenen Rads (3) in eine synchronisierte Lenkbewegung des nichtangetriebenen Rads (4) umwandelt, miteinander gekoppelt sind,
**dadurch gekennzeichnet, dass** die Übertragungsvorrichtung (17) folgendes umfasst: eine Drehplatte (6) mit einer asymmetrischen Form umfasst, die mit dem nichtangetriebenen Rad (4) verbunden ist und die um die zweite vertikale Achse drehbar ist, einen Ausgangswelle (12), die durch das erste lenkbare Rad beeinflusst wird; und eine Kette, einen Riemen (5) oder ähnliches, welche die asymmetrische Drehplatte (6) derart mit dem Ausgangswelle (12) verbinden, dass miteinander korrespondierende Drehradien der jeweiligen Räder in beiden Richtungen erreicht werden, d.h. die jeweiligen Radien (Ry, Ri) durch die Zentren der jeweiligen Räder kreuzen sich an einer verlängerten Linie durch eine horizontale Rotationsachse in einem zentralen Punkt (CP), wobei gleichzeitig die Räder in rechten Winkeln zu den Drehradien angeordnet sind.

2. Lenkanordnung (1) nach Anspruch 1 **dadurch gekennzeichnet, dass** die Übertragungsvorrichtung (17) eine Drehvorrichtung (7) umfasst, auf welcher das angetriebene Rad (3) angebracht ist.

3. Lenkanordnung (1) nach einem der Ansprüche 1 oder 2, **dadurch gekennzeichnet, dass** die Drehvorrichtung (7) ein erstes Zahnrad (9) umfasst, mit dem das angetriebene Rad gekoppelt ist, ein zweites Zahnrad (10) und ein drittes Zahnrad (11) umfasst, wobei das zweite Antriebsrad (10) befahren und mit dem ersten und dem zweiten Zahnrad (9, 11) in Eingriff steht.

4. Lenkanordnung (1) nach einem der Ansprüche 1 bis 3, **dadurch gekennzeichnet, dass** die Übertragungsvorrichtung (17) ein Druckmittel (13) umfasst, welches so angeordnet ist, dass es gegen die Kette oder den Riemen (5) drückt, um die Spannkraft der Kette oder des Riemens (5) zu regulieren.

5. Lenkanordnung (1) nach einem der Ansprüche 1 bis 4, **dadurch gekennzeichnet, dass** das erste Paar Räder in der Nähe einer ersten Transversalseite der Grundplatte und/oder Aufhängevorrichtung angeordnet ist und das zweite Paar Räder in der Nähe einer zweiten Transversalseite der Grundplatte und/oder Aufhängevorrichtung angeordnet.

6. Industrielles Nutzfahrzeug umfassend eine Lenkanordnung (1) nach einem der Ansprüche 1 bis 5.

## Revendications

1. Dispositif de direction (1) comprenant
une plaque de base et/ou un dispositif de suspension, sur lequel une première et une seconde paire de roues (2) sont disposées pour s'appuyer contre une surface sous-jacente, la première paire de roues ayant des roues non orientables, qui sont montées sur la plaque de base et/ou le dispositif de suspension,
la seconde paire de roues (2) comprenant une roue entraînée (3) qui est orientable autour d'un premier axe vertical, et une roue non entraînée (4), qui peut tourner autour d'un second axe vertical,
la roue non entraînée (4) de la seconde paire de roues (2) et la roue entraînée (3) sont mutuellement couplées par l'intermédiaire d'un dispositif de transmission (17), qui convertit un mouvement de direction pour la roue entraînée (3) en un mouvement de direction synchronisé de la roue non entraînée (4),
**caractérisé en ce que** le dispositif de transmission (17) comprend une plaque tournante (6) ayant une forme asymétrique qui est reliée à la roue non entraînée (4), qui peut être tournée autour dudit second axe vertical ; un arbre de sortie (12), qui est affecté par la première roue orientable ; et une chaîne, une courroie (5) ou un dispositif similaire, qui relie ladite plaque tournante asymétrique (6) et ledit arbre de sortie (12), de sorte que des rayons de rotation mutuellement correspondants pour les roues respectives sont obtenus dans les deux directions de rotation, c'est-à-dire que les rayons (Ry, Ri) passant par le centre de la roue respective se croisent l'un l'autre sur une ligne étendue à travers un axe de rotation horizontal en un point central (CP), alors que les roues sont disposées dans le même temps à des angles droits par rapport aux rayons de rotation.

2. Dispositif de direction selon la revendication 1, **caractérisé en ce que** le dispositif de transmission (17) comprend un dispositif tournant (7), sur lequel est montée la roue entraînée (3).

3. Dispositif de direction selon l'une quelconque des revendications 1 à 2, **caractérisé en ce que** le dispositif tournant (7) comprend un premier pignon (9), auquel est couplée la roue entraînée (3), un deuxième pignon (10) et un troisième pignon (11), de sorte que le deuxième pignon (10) est entraîné et est en prise avec les premier et troisième pignons (9, 11).

4. Dispositif de direction selon l'une quelconque des revendications 1 à 3, **caractérisé en ce que** le dispositif de transmission (17) comprend des moyens de pression (13), qui sont agencés pour appuyer contre la chaîne ou courroie (5) afin de réguler la force de traction de la chaîne ou courroie (5).

5. Dispositif de direction selon l'une quelconque des revendications 1 à 4, **caractérisé en ce que** la première paire de roues est disposée à proximité d'un premier côté transversal de la plaque de base et/ou du dispositif de suspension, et la seconde paire de roues est disposée à proximité d'un second côté transversal de la plaque de base et/ou du dispositif de suspension.

6. Chariot industriel comprenant le dispositif de direction selon l'une quelconque des revendications 1 à 5 précédentes.
